# FASCICULE DE BREVET EUROPEEN

(11) **EP 3 492 763 B1**
(45) Date de publication et mention de la délivrance du brevet: **24.02.2021**
(21) Numéro de dépôt: 17204284.8
(22) Date de dépôt: 29.11.2017
(51) Int. Cl.: F16D 3/72, F16D 47/02

(54) **SYSTEME DE TRANSMISSION MECANIQUE DE PUISSANCE, BOITE DE TRANSMISSION DE PUISSANCE ET AERONEF**
MECHANISCHES LEISTUNGSÜBERTRAGUNGSSYSTEM, LEISTUNGSÜBERTRAGUNGSGETRIEBE UND LUFTFAHRZEUG
MECHANICAL POWER TRANSMISSION SYSTEM, POWER TRANSMISSION BOX AND AIRCRAFT

(43) Date de publication de la demande: 05.06.2019
(73) Titulaire: Airbus Helicopters, 13725 Marignane Cedex (FR)
(72) Inventeur: FAGES, Douchane, 13510 EGUILLES (FR)
(74) Mandataire: GPI & Associés

(56) Documents cités:
- WO-A1-2011/088860
- WO-A1-2013/041082
- DE-U1- 29 522 268
- FR-A- 522 428
- FR-A- 616 929
- FR-A1- 3 057 850

## Description

La présente invention concerne un système de transmission mécanique de puissance, une boîte de transmission de puissance et un aéronef.

En particulier, un système de transmission mécanique de puissance peut avoir pour fonction de transmettre mécaniquement une puissance entre un moteur et un rotor. En effet, un giravion peut comporter un moteur mettant en mouvement une boîte de transmission de puissance, cette boîte de transmission de puissance entrainant en rotation un rotor. Un tel système de transmission mécanique de puissance peut alors s'étendre entre le rotor et le moteur, et éventuellement au moins partiellement dans la boîte de transmission de puissance. Un tel système de transmission mécanique de puissance est dénommé plus simplement « système de transmission » par la suite.

Dans un système de transmission, un arbre intermédiaire de transmission de puissance est couramment utilisé pour transférer un mouvement de rotation et un couple entre deux arbres principaux. Cet arbre intermédiaire est alors relié par des moyens d'accouplement à un arbre principal menant et à un arbre principal mené.

Dès lors, le système de transmission mécanique comporte successivement selon une direction longitudinale un arbre principal menant, un premier moyen d'accouplement, un arbre intermédiaire, un deuxième moyen d'accouplement et un arbre principal mené. L'arbre principal menant met en rotation l'arbre intermédiaire via le premier moyen d'accouplement, et l'arbre intermédiaire met en rotation l'arbre principal mené via le deuxième moyen d'accouplement.

Dans des conditions normales, l'arbre principal menant, le premier moyen d'accouplement, l'arbre intermédiaire, le deuxième moyen d'accouplement et l'arbre principal mené sont alignés et coaxiaux. Sous certaines conditions de fonctionnement, un arbre intermédiaire peut néanmoins être amené à subir un désalignement axial, radial ou angulaire avec l'arbre principal menant et l'arbre principal mené auxquels l'arbre intermédiaire est accouplé. Lorsque le système de transmission n'est pas dimensionné pour tolérer ce désalignement, le désalignement tend à générer des efforts parasites dans la chaîne de transmission de puissance susceptibles d'endommager cette chaîne de transmission de puissance.

Pour au moins limiter la transmission d'efforts parasites entre deux arbres principaux, la longueur de l'arbre intermédiaire du système de transmission peut être maximisée, afin de minimiser l'effet d'un désalignement éventuel. En effet, plus l'arbre intermédiaire est long, moins les efforts parasites générés par un désalignement donné entre l'arbre principal menant et l'arbre principal mené sont importants.

De manière complémentaire ou alternative, l'arbre intermédiaire peut présenter une souplesse intrinsèque permettant de tolérer des désalignements entre l'arbre principal menant et l'arbre principal mené sans générer des efforts parasites.

Le document FR 2450381 illustre un système de transmission ayant un arbre intermédiaire souple.

En outre, des moyens d'accouplement particuliers peuvent être utilisés pour minimiser l'impact des désalignements axiaux, radiaux et angulaires. Ces moyens d'accouplements peuvent prendre la forme de diaphragmes, de systèmes à plaques, ou de tout autre dispositif assouplissant le système de transmission dans les directions perpendiculaires à la transmission d'un couple mécanique.

Un moyen d'accouplement à diaphragmes comprend deux organes annulaires de fines épaisseurs dit « diaphragmes ». Chaque organe annulaire comporte un disque annulaire flexible de fine épaisseur s'étendant radialement d'une base vers une périphérie externe. Un organe annulaire est fixé par sa base à un arbre de transmission, et l'autre organe annulaire est fixé à un élément mécanique. Dès lors, les deux organes annulaires sont reliés l'un à l'autre uniquement via leurs périphéries externes. Ces périphéries externes peuvent être fixées l'une à l'autre par soudure, ou encore à l'aide de boulons et d'écrous de blocage par exemple.

Un moyen d'accouplement à plaques comporte un flasque principal solidaire d'un arbre de transmission et un flasque principal solidaire d'un élément mécanique. Au moins une plaque est alors boulonnée par des boulons à un flasque principal et par d'autres boulons à l'autre flasque principal. Une telle plaque peut prendre la forme d'une étoile par exemple.

Les documents FR 1020765, FR 2919363, FR 2990011, WO 2013/041082 et US 5.163.876 décrivent divers types de moyens d'accouplement.

A l'intérieur d'une boîte de transmission de puissance, la liaison réalisée entre deux arbres principaux est optimisée pour minimiser l'introduction d'efforts parasites dus à des désalignements. En effet, la prise en compte d'efforts parasites dans le dimensionnement de la boîte de transmission de puissance peut conduire à un surdimensionnement de cette boîte de transmission de puissance, et donc à une pénalité de masse ou d'encombrement. Par exemple, un système de roulement à billes en prise sur l'arbre principal mené pourrait être amené à être surdimensionné pour résister à des efforts parasites indus en cas de désalignement non toléré. A l'inverse et sous l'action d'efforts parasites non anticipés, un système dimensionné pour un niveau de puissance donné pourrait voir sa durée de vie, sa fiabilité ou sa capacité de transmission de puissance réduite.

Par exemple, le carter d'une boîte de transmission de puissance peut être très rigide, pour limiter les risques de désalignements d'éléments mécaniques au sein de la boîte de transmission de puissance suite à une déformation du carter. Bien qu'efficace, cette solution a un coût en terme de masse.

Quelle que soit la nature des moyens d'accouplement, les arbres principaux s'étendent respectivement le long d'axes d'extension qui sont superposés en l'absence de désalignement. Lorsque l'arbre principal menant et l'arbre principal mené se désalignent, la souplesse des moyens d'accouplement voire de l'arbre intermédiaire de transmission de puissance permettent aux arbres principaux de se déplacer l'un par rapport à l'autre. Un désalignement peut se traduire par un décalage angulaire entre les axes d'extension des deux arbres principaux, d'un angle différent de 180°. Ce décalage angulaire induit un décalage radial de l'arbre principal menant par rapport à l'arbre principal mené.

A l'image d'un cardan, la valeur du décalage radial maximal toléré sans introduction d'efforts parasites est conditionnée par la distance séparant longitudinalement les moyens d'accouplement, et donc les extrémités de l'arbre intermédiaire. Dès lors, l'obtention d'un décalage radial relativement important sans introduction d'efforts parasites parait difficile lorsque ladite distance est faible.

Par conséquent, lorsque les arbres principaux sont proches l'un de l'autre pour des raisons d'encombrement par exemple, un système de transmission usuel tolère uniquement de faibles décalages radiaux entre ces arbres principaux. Une boîte de transmission de puissance munie d'un tel système de transmission pourrait donc éventuellement être sujette à des actions de maintenance fréquentes pour inspecter le système de transmission.

Les documents US 6.666.102 et 2003/213.320 décrivent un système de transmission comprenant un unique diaphragme.

Le document US 3.301.007 présente un système de transmission. Ce système de transmission comporte une liaison principale qui est munie de joints à soufflets entre deux arbres. De plus, le système de transmission comporte une liaison de secours fonctionnant par interférence de forme en cas de rupture d'un soufflet.

Le document FR 2.795.386 est éloigné du domaine technique de l'invention en enseignant d'accoupler deux tubes concentriques à leurs extrémités distales pour générer un effort en torsion.

La présente invention a alors pour objet de proposer un système de transmission de puissance compact et susceptible de minimiser la transmission d'efforts parasites en cas de désalignement.

Selon l'invention, un système de transmission mécanique de puissance comprend un premier arbre principal qui s'étend longitudinalement jusqu'à un premier moyen d'accouplement et un deuxième arbre principal qui s'étend longitudinalement jusqu'à un deuxième moyen d'accouplement. Le premier arbre principal est solidarisé au premier moyen d'accouplement et le deuxième arbre principal est solidarisé au deuxième moyen d'accouplement. De plus, le système de transmission mécanique de puissance comprend un arbre intermédiaire solidarisé au premier moyen d'accouplement, un sous-ensemble du système de transmission mécanique de puissance comprenant successivement et longitudinalement selon un sens d'extension le premier arbre principal puis le premier moyen d'accouplement puis l'arbre intermédiaire, le deuxième arbre principal étant un arbre creux.

Le premier moyen d'accouplement et le deuxième moyen d'accouplement sont reliés mécaniquement par au moins ledit arbre intermédiaire, cet arbre intermédiaire traversant le deuxième arbre principal pour être relié au deuxième moyen d'accouplement, le deuxième arbre principal étant agencé longitudinalement dans un espace situé entre le premier moyen d'accouplement et le deuxième moyen d'accouplement.

Le deuxième arbre principal est donc un arbre creux qui s'étend entre deux extrémités. Dès lors, le terme « traversant » signifie que l'arbre intermédiaire traverse de part en part le deuxième arbre principal, en passant au travers desdites extrémités. Le deuxième arbre principal et le premier arbre principal peuvent être coaxiaux et concentriques hors désalignement. Le deuxième arbre principal et le premier arbre principal peuvent être étendus selon ledit sens d'extension jusqu'à respectivement le premier moyen d'accouplement et le deuxième moyen d'accouplement.

Dès lors, certains systèmes de l'art antérieur possèdent un premier arbre principal ainsi qu'un arbre intermédiaire et un deuxième arbre principal agencés les uns à la suite des autres. En particulier, le premier arbre principal s'étend selon le sens d'extension d'une première zone extrémale à une deuxième zone extrémale et le deuxième arbre principal s'étend selon le sens d'extension d'une première portion extrémale à une deuxième portion extrémale selon ce même sens d'extension. L'arbre intermédiaire est alors fixé directement à la deuxième zone extrémale par le premier moyen d'accouplement. En outre selon cet art antérieur, l'arbre intermédiaire est fixé directement à la première portion extrémale par le deuxième moyen d'accouplement. La première zone extrémale du premier arbre principal peut alors être reliée à un organe mécanique menant ou mené, et la deuxième portion extrémale du deuxième arbre principale est reliée alors à un organe mécanique mené ou menant.

A l'inverse, selon l'invention l'arbre intermédiaire traverse le deuxième arbre principal pour être fixé directement ou indirectement à la deuxième portion extrémale. La première zone extrémale du premier arbre principal peut alors être reliée à un organe mécanique menant ou mené, la première portion extrémale du deuxième arbre principale étant reliée alors à un organe mécanique mené ou menant.

Cette architecture permet de positionner le deuxième arbre principal entre les moyens d'accouplement et autour de l'arbre intermédiaire, et non pas à la suite de l'arbre intermédiaire.

Dès lors, le premier moyen d'accouplement et le deuxième moyen d'accouplement peuvent être séparés longitudinalement par une grande distance, alors que le premier arbre principal et le deuxième arbre principal sont proches pour obtenir un système compact.

La présente invention concerne donc un système permettant d'obtenir une compacité optimale, tout en conservant une distance importante entre les moyens d'accouplement pour tolérer un décalage radial important. Dès lors, l'organe mécanique destiné à être mis en mouvement par le système de transmission peut ne pas être sollicité par des efforts parasites générés par des désalignements indus.

Le système de transmission mécanique de puissance peut comporter une ou plusieurs des caractéristiques qui suivent.

Ainsi, un espace étant présent entre le premier moyen d'accouplement et le deuxième moyen d'accouplement, le premier arbre principal peut porter des cannelures agencées en dehors dudit espace.

Les cannelures du premier arbre principal sont agencées en amont du premier moyen d'accouplement au regard du sens d'extension, par exemple sur la première zone extrémale du premier arbre principal.

Ces cannelures permettent un agencement aisé du système de transmission, par exemple dans une boîte de transmission de puissance.

Par ailleurs, le deuxième arbre principal peut porter des cannelures agencées au moins partiellement dans ledit espace.

Selon une première réalisation, l'arbre intermédiaire peut être fixé au deuxième moyen d'accouplement.

Par exemple, l'arbre intermédiaire peut être fixé directement au deuxième moyen d'accouplement, par exemple en étant soudé ou boulonné au deuxième moyen d'accouplement.

Selon une deuxième réalisation, un arbre de liaison est solidarisé en rotation à l'arbre intermédiaire par une première connexion mécanique et au deuxième moyen d'accouplement par une deuxième connexion mécanique, ledit arbre de liaison entourant une zone distale de l'arbre intermédiaire, la zone distale étant en saillie longitudinale du deuxième moyen d'accouplement selon ledit sens d'extension.

L'arbre intermédiaire peut être fixé indirectement au deuxième moyen d'accouplement
Le premier moyen d'accouplement n'est donc pas relié au deuxième moyen d'accouplement par un unique arbre mais par un arbre intermédiaire et un arbre de liaison. L'arbre intermédiaire traverse de part en part l'arbre de liaison afin que l'arbre de liaison puisse entourer l'arbre intermédiaire.

Cette deuxième réalisation permet d'obtenir un arbre intermédiaire long dans un espace restreint. Cette deuxième réalisation va à l'encontre de préjugés en utilisant deux arbres au lieu d'un pour pourtant obtenir un système compact. Or, il ne parait pas logique d'ajouter un arbre pour minimiser la longueur du système.

Par ailleurs, ladite première connexion mécanique peut être réversible.

Le terme « réversible » signifie que deux éléments peuvent être désolidarisés sans détruire un des ces éléments ou la connexion mécanique les liant. Deux éléments désolidarisés peuvent être à nouveau fixés l'un à l'autre par la même connexion mécanique. Par exemple, une soudure ne constitue pas un moyen de connexion réversible.

A l'inverse, la deuxième connexion mécanique peut être irréversible. Par exemple l'arbre de liaison est soudé au deuxième moyen d'accouplement.

L'utilisation d'une première connexion réversible rend facilement démontable le système de transmission.

Par exemple, l'arbre de liaison peut comporter un tronçon conique dit « tronçon extérieur » et ledit arbre intermédiaire peut comporter un tronçon conique dit « tronçon intérieur », ledit tronçon intérieur étant emmanché, éventuellement en force, dans ledit tronçon extérieur.

La première connexion réversible comprend un emmanchement conique de l'arbre intermédiaire dans l'arbre de liaison.

La première connexion mécanique peut comporter des cannelures dites « cannelures extérieures » qui sont portées par l'arbre de liaison et qui sont en regard de l'arbre intermédiaire, ladite première connexion mécanique comportant des cannelures dites « cannelures intérieures » qui sont portées par l'arbre intermédiaire et en regard de l'arbre de liaison, lesdites cannelures intérieures étant en prise avec les cannelures extérieures.

L'arbre intermédiaire peut s'étendre du premier moyen d'accouplement jusqu'à une extrémité filetée, un écrou étant vissé sur ladite extrémité filetée, par exemple pour bloquer longitudinalement ledit arbre de liaison.

Eventuellement, la première connexion réversible comporte un emmanchement conique, des cannelures et un écrou.

Dès lors, le système de transmission comporte un système d'arbres souple, ce système d'arbres souple ayant un arbre intermédiaire et un arbre de liaison qui sont par exemple coaxiaux et concentriques au moins en l'absence de désalignement. L'arbre intermédiaire et l'arbre de liaison sont assemblés par la combinaison d'un emmanchement conique et de cannelures, et sont maintenues solidaires par un écrou. L'écrou permet de serrer l'arbre de liaison et de précontraindre axialement l'emmanchement conique.

Un tel premier moyen de connexion réversible permet de pouvoir transmettre un couple mécanique important, sans utiliser des moyens ayant un grand diamètre et donc un grand encombrement.

De manière alternative, le premier moyen de connexion réversible peut comprendre des cannelures seules, un emmanchement conique seul, des moyens connus sous l'appellation anglaise « curvic coupling »...

En fonction de l'espace disponible autour du système de transmission et du couple à transmettre, le premier moyen de connexion peut aussi comprendre deux collerettes solidarisées respectivement à l'arbre intermédiaire et à l'arbre de liaison, les collerettes étant fixées directement l'une à l'autre par des moyens de vissage.

Selon un autre aspect, au moins un desdits premier et deuxième moyen d'accouplements est un moyen d'accouplement à diaphragmes, ledit moyen d'accouplement à diaphragmes comportant un premier diaphragme qui s'étend radialement d'une première base à une première zone périphérique et un deuxième diaphragme qui s'étend radialement d'une deuxième base à une deuxième zone périphérique, la deuxième zone périphérique étant fixée à la première zone périphérique.

Par exemple, la deuxième zone périphérique est fixée directement à la première zone périphérique, par exemple en étant soudée à la première zone périphérique d'un même moyen d'accouplement. De même, la base de chaque diaphragme est par exemple soudée à l'arbre correspondant

Lorsque le système de transmission est agencé dans une boîte de transmission de puissance, l'utilisation de diaphragmes soudés s'avère intéressante. En effet, contrairement à un système à plaques, un moyen d'accouplement à diaphragmes soudés ne présente pas de liaisons boulonnées devant être régulièrement inspectées.

La présente proposition permet d'utiliser des diaphragmes connus capables de transmettre des couples mécaniques nettement plus importants, tout en restant compacts et en gardant l'éloignement nécessaire entre les deux ensembles de diaphragmes. Etant donné les efforts exercés, seuls les diaphragmes peuvent éventuellement se déformer pour tolérer les différents désalignements.

Diverses formes spécifiques de diaphragmes peuvent être utilisées. De plus, le moyen d'accouplement peut en outre posséder un système de protection en cas de rupture de la liaison principale, le cas échéant entre deux diaphragmes.

Selon d'autres variantes, les systèmes connus sous les dénominations Flector ou K-flex sont envisageables.

Selon un autre aspect, le premier arbre principal pouvant être séparé longitudinalement du deuxième arbre principal par une première longueur maximale, ledit premier moyen d'accouplement est séparé longitudinalement du deuxième moyen d'accouplement par une deuxième longueur maximale, la deuxième longueur est plus grande que la première longueur.

L'expression « longueur maximale » désigne la plus grande distance entre deux pièces parallèlement à un axe d'extension des pièces.

Par ailleurs, l'invention concerne une boîte de transmission de puissance.

Cette boîte de transmission de puissance comporte ainsi un système de transmission mécanique de puissance selon l'invention.

La boîte de transmission de puissance peut de plus comporter une ou plusieurs des caractéristiques qui suivent.

Ainsi, la boîte de transmission de puissance peut être modulaire en comprenant des modules fixés de manière réversible les uns aux autres, ces modules comprenant :
- un module principal délimité par un carter principal, ledit module principal accueillant au moins un organe mécanique rotatif.
- un module d'entrée délimité par un carter secondaire, ledit module d'entrée logeant au moins ledit système de transmission mécanique de puissance, un desdits premier arbre principal et deuxième arbre principal du système de transmission mécanique de puissance engrenant ledit organe mécanique, l'arbre principal n'engrenant pas ledit organe mécanique étant intégralement contenu dans le module d'entrée et étant engrené par un dispositif d'entrainement.

Par exemple, l'organe mécanique peut être une roue libre.

Dès lors, soit le premier arbre principal engrène ledit organe mécanique et le deuxième arbre principal est engrené par un dispositif d'entrainement, soit le deuxième arbre principal engrène ledit organe mécanique et le premier arbre principal est engrené par un dispositif d'entrainement
La boîte de transmission de puissance est modulaire, puisque le module d'entrée peut être désaccouplé du module principal.

L'invention permet en effet de rendre modulaire la boîte de transmission. L'utilisation de modules induit de fait la présence de tolérances de fabrication pour assembler les divers modules. Or, ces tolérances peuvent induire à leur tour des désalignements entre les divers arbres. L'utilisation d'un système de transmission tolérant de tels désalignements permet ainsi la mise en œuvre de divers modules.

En outre, les divers carters peuvent éventuellement être allégés. En effet, le système de transmission tend à limiter les efforts parasites transmis en cas de désalignement, ce qui permet éventuellement d'utiliser un carter « assoupli ».

De plus, la compacité de l'invention permet d'obtenir un carter d'entrée de faibles dimensions.

Enfin, le système de transmission peut présenter une largeur restreinte au diamètre de diaphragmes le cas échéant, ce qui peut permettre d'utiliser des moyens de roulement à billes ou à rouleaux de faibles dimensions.

Eventuellement, la boîte de transmission peut comporter une cloison interposée entre le module d'entrée et le module principal, ladite cloison et le carter secondaire délimitant un volume d'entrée, le premier arbre principal étant au moins partiellement en dehors dudit volume pour engrener ledit organe mécanique.

Le dispositif d'entrainement peut comporter une roue d'entrée engrenant ledit deuxième arbre principal et un pignon d'entrée engrenant ladite roue d'entrée, ledit pignon d'entrée saillant en dehors dudit volume à l'extérieur de la boîte de transmission de puissance.

Dès lors, le pignon d'entrée entraine une roue d'entrée de réduction de vitesse de rotation. Cette roue d'entrée entraine en rotation le premier arbre via successivement le deuxième arbre, le deuxième moyen d'accouplement, l'arbre de liaison, le premier moyen d'accouplement et l'arbre intermédiaire. De façon inhabituelle et surprenante dans une boîte de transmission de puissance, l'arbre de liaison est orienté à partir du deuxième arbre principal vers l'extérieur du module d'entrée, l'arbre intermédiaire s'étendant selon un sens contraire pour rejoindre le premier arbre principal.

Par ailleurs, un aéronef peut aussi comporter un système de transmission mécanique de puissance selon l'invention, agencé ou non dans une boîte de transmission de puissance.

L'invention et ses avantages apparaîtront avec plus de détails dans le cadre de la description qui suit avec des exemples donnés à titre illustratif en référence aux figures annexées qui représentent :
- la figure 1, un schéma d'un système de transmission selon l'art antérieur,
- les figures 2 et 3, des schémas de systèmes de transmission selon l'invention, et
- la figure 4, un schéma d'un système de transmission selon l'invention agencé dans une boîte de transmission de puissance.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale et la troisième direction Z est dite en élévation. Le terme « radial » est relatif à toute direction perpendiculaire à la première direction X.

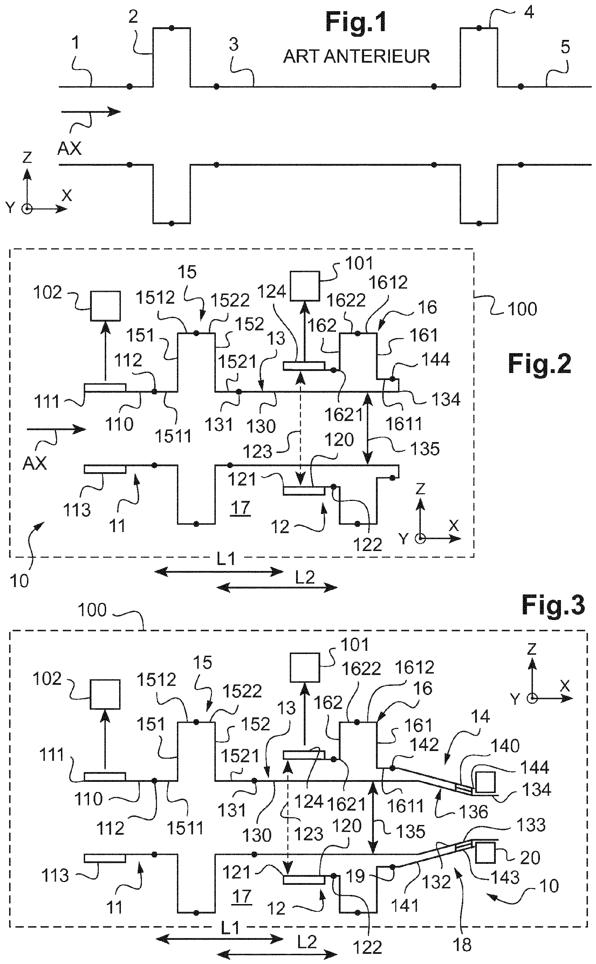

La figure 1 illustre un système de transmission de puissance selon l'art antérieur. Ce système de transmission de puissance comprend successivement et les uns à la suite des autres un premier arbre principal 1, un premier moyen d'accouplement 2, un arbre intermédiaire 3, un deuxième moyen d'accouplement 4, puis un deuxième arbre principal 5.

L'invention vise une toute autre architecture.

La figure 2 illustre un système de transmission 10 mécanique de puissance. Par exemple, ce système de transmission 10 est agencé dans un aéronef 100. Cet aéronef 100 peut notamment être un giravion muni d'un rotor 102 et d'au moins un moteur 101. Un tel rotor peut au moins participer à la sustentation, à la propulsion ou au contrôle du mouvement en lacet du giravion. Dès lors, le système de transmission 10 est interposé entre le moteur 101 et le rotor 102 pour transmettre au rotor 102 un mouvement rotatif initié par le moteur 101.

Le système de transmission 10 peut être agencé dans ou en dehors d'une boîte de transmission de puissance.

Quel que soit son agencement, le système de transmission 10 comprend un premier arbre principal 11 et un deuxième arbre principal 12. Le premier arbre principal 11 et le deuxième arbre principal 12 sont à relier d'une part à un organe menant mettant en mouvement le système de transmission 10 et, d'autre part, à un organe mené mis en mouvement par le système de transmission 10. Dès lors, soit le premier arbre principal 11 et le deuxième arbre principal 12 sont reliés respectivement à un organe menant et à un organe mené, soit le premier arbre principal 11 et le deuxième arbre principal 12 sont reliés respectivement à un organe mené et à un organe menant.

De plus, le système de transmission 10 comporte au moins un premier moyen d'accouplement 15, un deuxième moyen d'accouplement 16 et un arbre intermédiaire 13 pour rendre le premier arbre principal 11 solidaire en rotation du deuxième arbre principal 12, chaque élément effectuant une rotation sur lui-même autour de son axe de rotation.

Par conséquent, le premier arbre principal 11 comporte un corps dit « premier corps 110 » pouvant prendre une forme à symétrie de révolution creuse. Le premier corps 110 s'étend en épaisseur d'une face intérieure à une face extérieure. Ce premier corps 110 s'étend longitudinalement d'une première zone extrémale 111 à une deuxième zone extrémale 112 selon un sens d'extension AX.

Par suite, la première zone extrémale 111 du premier arbre principal 11 peut être munie d'un moyen de liaison à un organe menant ou à un organe mené. Un tel moyen de liaison peut comprendre des cannelures 113 ménagées sur la face extérieure du premier corps 110. Ces cannelures 113 peuvent être dénommées « premières cannelures » par commodité.

En outre, le premier arbre principal 11 s'étend longitudinalement au moins jusqu'au premier moyen d'accouplement 15. Ainsi, le premier arbre principal 11 est solidarisé à ce premier moyen d'accouplement 15, à savoir fixé directement à ce premier moyen d'accouplement 15.

Par exemple, la deuxième zone extrémale 112 est fixée, éventuellement directement voire par une soudure, au premier moyen d'accouplement 15.

Le premier moyen d'accouplement 15 peut être un moyen d'accouplement à diaphragmes. Dès lors, le premier moyen d'accouplement comporte un premier diaphragme 151 qui s'étend radialement d'une première base 1511 à une première zone périphérique 1512. De plus, le premier moyen d'accouplement comporte un deuxième diaphragme 152 qui s'étend radialement d'une deuxième base 1521 à une deuxième zone périphérique 1522. La première base 1511 est par exemple soudée à l'extrémité de la deuxième zone extrémale 112 du premier arbre principal 11. En outre, la deuxième zone périphérique 1522 du premier moyen d'accouplement 15 est fixée, par exemple directement voire par soudure, à la première zone périphérique 1512 du premier moyen d'accouplement 15.

Selon un autre aspect, le deuxième arbre principal 12 comporte un corps dit « deuxième corps 120 » pouvant prendre une forme à symétrie de révolution creuse. Le deuxième corps 120 s'étend en épaisseur d'une face intérieure à une face extérieure et peut présenter un diamètre minimal 123. Ce deuxième corps 120 s'étend longitudinalement d'une première portion extrémale 121 à une deuxième portion extrémale 122 selon le sens d'extension AX.

Par suite, la première portion extrémale 121 du deuxième arbre principal 12 peut être munie d'un moyen de liaison à un organe menant ou à un organe mené. Un tel moyen de liaison peut comprendre des cannelures 124 ménagées sur la face extérieure du deuxième corps 120. Ces cannelures 124 peuvent être dénommées « deuxièmes cannelures » par commodité.

En outre, le deuxième arbre principal 12 s'étend longitudinalement au moins jusqu'au deuxième moyen d'accouplement 16. Ainsi, le deuxième arbre principal 12 est solidarisé à ce deuxième moyen d'accouplement 16, à savoir fixé directement à ce deuxième moyen d'accouplement 16.

Par exemple, la deuxième portion extrémale 122 est fixée, éventuellement directement voire par une soudure, au deuxième moyen d'accouplement 16.

Le deuxième moyen d'accouplement 16 peut être un moyen d'accouplement à diaphragmes. Dès lors, le deuxième moyen d'accouplement 16 comporte un premier diaphragme 161 qui s'étend radialement d'une première base 1611 à une première zone périphérique 1612 et un deuxième diaphragme 162 qui s'étend radialement d'une deuxième base 1621 à une deuxième zone périphérique 1622. La deuxième base du deuxième moyen d'accouplement 16 est par exemple soudée à l'extrémité de la deuxième portion extrémale du deuxième arbre principal 12. En outre, la deuxième zone périphérique 1622 du deuxième moyen d'accouplement 16 est fixée, par exemple directement voire par soudure, à la première zone périphérique 1612 du deuxième moyen d'accouplement 16.

Pour relier mécaniquement le premier moyen d'accouplement 15 au deuxième moyen d'accouplement 16, le système de transmission est muni d'un arbre intermédiaire 13.

L'arbre intermédiaire 13 comporte un corps dit «corps intermédiaire 130 » pouvant prendre une forme à symétrie de révolution creuse. Le corps intermédiaire 130 s'étend en épaisseur d'une face intérieure à une face extérieure et peut présenter un diamètre maximal 135. Ce corps intermédiaire 130 s'étend longitudinalement d'une première extrémité 131 à deuxième extrémité 134 selon le sens d'extension AX.

L'arbre intermédiaire 13 est solidarisé au premier moyen d'accouplement 15, et par exemple fixé directement au premier moyen d'accouplement 15. Par suite, la première extrémité 131 de l'arbre intermédiaire 13 est fixée, et par exemple directement voire soudée, au premier moyen d'accouplement 15. Eventuellement, cette première extrémité 131 de l'arbre intermédiaire est soudée à la base 1521 du deuxième diaphragme 152 du premier moyen d'accouplement 15.

Un sous-ensemble du système de transmission 10 possède alors successivement selon le sens d'extension AX, et les uns après les autres, le premier arbre principal 11, le premier moyen d'accouplement 15 puis l'arbre intermédiaire 13. Par contre, le deuxième arbre principal 12 ne se situe pas à la suite de l'arbre intermédiaire. Ce sous-ensemble peut être qualifié de premier sous-ensemble par commodité.

En effet, l'arbre intermédiaire 13 passe longitudinalement au travers du deuxième arbre principal 12 et du deuxième moyen d'accouplement 16. L'arbre intermédiaire est alors fixé directement ou indirectement au deuxième moyen d'accouplement, et le cas échéant à la première base 1611 du premier diaphragme 161 du deuxième moyen d'accouplement 16. Pour ce faire, le diamètre maximal 135 de l'arbre intermédiaire est inférieur au diamètre minimal 123 du deuxième arbre principal 12.

Dès lors, le deuxième arbre principal 12 n'est pas agencé longitudinalement à la suite de l'arbre intermédiaire 13, mais autour de l'arbre intermédiaire 13. Le deuxième arbre principal 12 est ainsi agencé longitudinalement dans un espace 17 qui est situé longitudinalement entre le premier moyen d'accouplement 15 et le deuxième moyen d'accouplement 16.

Avec cette caractéristique, le système de transmission 10 peut être compact. En effet, une première longueur L1 maximale sépare longitudinalement le premier arbre principal 11 et le deuxième arbre principal 12. Cette première longueur L1 peut être mesurée entre le bout de la deuxième zone extrémale 112 et le bout de la première portion extrémale 121. Le premier moyen d'accouplement 15 est en outre séparé longitudinalement du deuxième moyen d'accouplement 16 par une deuxième longueur L2 maximale. Par exemple, la deuxième longueur L2 est mesurée entre le deuxième diaphragme 152 du premier moyen d'accouplement 15 et le deuxième diaphragme 162 du deuxième moyen d'accouplement 16 qui sont en regard l'un de l'autre. La deuxième longueur L2 peut alors être supérieure à la première longueur L1.

Par conséquent, même si le premier arbre principal 11 et le deuxième arbre principal 12 sont proches pour des raisons de compacité, le système de transmission peut comprendre deux moyens d'accouplement 15, 16 très éloignés l'un de l'autre.

Selon la première réalisation de la figure 2, l'arbre intermédiaire 13 est fixé directement au deuxième moyen d'accouplement. Par exemple, la deuxième extrémité 134 de l'arbre intermédiaire est soudée ou vissée à la première base 1611 du premier diaphragme 161 du deuxième moyen d'accouplement.

Selon la deuxième réalisation de la figure 3, l'arbre intermédiaire 13 est fixé indirectement au deuxième moyen d'accouplement 16 par un arbre de liaison 14.

L'arbre de liaison 14 comporte un corps dit « corps de liaison 140 » pouvant prendre une forme à symétrie de révolution creuse. Le corps de liaison 140 s'étend en épaisseur et radialement d'une face intérieure à une face extérieure. Ce corps de liaison 140 s'étend longitudinalement d'une première terminaison 142 à une deuxième terminaison 144 selon le sens d'extension AX.

L'arbre de liaison 14 est solidarisé au deuxième moyen d'accouplement 16, et en particulier fixé directement au deuxième moyen d'accouplement 16. Par suite, la première terminaison 142 de l'arbre de liaison 14 est fixée par une connexion dite « deuxième connexion mécanique 19 au deuxième moyen d'accouplement 16, et par exemple soudée au deuxième moyen d'accouplement 16. Eventuellement, cette première terminaison 142 de l'arbre de liaison 14 est soudée à la base 1611 du premier diaphragme 161 du deuxième moyen d'accouplement 16.

Un sous-ensemble du système de transmission 10 possède alors successivement selon le sens d'extension AX, et les uns après les autres, le deuxième arbre principale 12, le deuxième moyen d'accouplement 16 puis l'arbre de liaison 14. Ce sous-ensemble peut être qualifié de deuxième sous-ensemble par commodité.

Ce deuxième sous-ensemble entoure l'arbre intermédiaire 13 qui traverse successivement selon le sens d'extension le deuxième arbre principal 12, le deuxième moyen d'accouplement 16 puis l'arbre de liaison 14. En particulier, l'arbre de liaison 14 entoure une zone dite « zone distale 136 » de l'arbre intermédiaire 13. Cette zone distale 136 déborde ainsi longitudinalement selon le sens d'extension AX du deuxième moyen d'accouplement 16.

Par ailleurs, l'arbre intermédiaire 13 est fixé par une première connexion mécanique 18 à l'arbre de liaison. Par exemple, la deuxième extrémité 134 de l'arbre intermédiaire est soudée ou vissée à la deuxième terminaison 144 de l'arbre de liaison.

La première connexion mécanique 18 est cependant favorablement réversible, en permettant le démontage du système de transmission 10.

Une telle première connexion mécanique 18 peut comporter un tronçon conique dit « tronçon extérieur 141 » de l'arbre de liaison 14. De plus, la première connexion mécanique 18 peut comporter un tronçon conique dit « tronçon intérieur 132 » de l'arbre intermédiaire 13. Chaque tronçon conique tend à s'évaser selon un sens opposé au sens d'extension AX, et donc à s'affiner selon ledit sens d'extension AX.

Dès lors, le tronçon intérieur 132 est emmanché dans le tronçon extérieur 141.

La première connexion mécanique 18 peut comporter des cannelures. En effet, la première connexion mécanique 18 peut comporter des cannelures dites « cannelures extérieures 143 » qui sont portées par une face intérieure de l'arbre de liaison 14 et qui sont en regard de l'arbre intermédiaire 13. De plus, la première connexion mécanique 18 peut comporter des cannelures dites « cannelures intérieures 133 » qui sont portées par une face extérieure de l'arbre intermédiaire 13 et en regard de l'arbre de liaison 14. En position de montage, les cannelures intérieures 133 sont alors en prise avec les cannelures extérieures 143.

Le système à emmanchement et le système à cannelures peuvent être complémentaires.

Eventuellement, la première connexion mécanique 18 peut comporter un écrou 20 vissé à l'arbre intermédiaire 13. En effet, la deuxième extrémité 134 de l'arbre intermédiaire peut être une extrémité filetée. L'écrou 20 est alors vissé sur cette extrémité 134 filetée pour bloquer longitudinalement l'arbre de liaison 14.

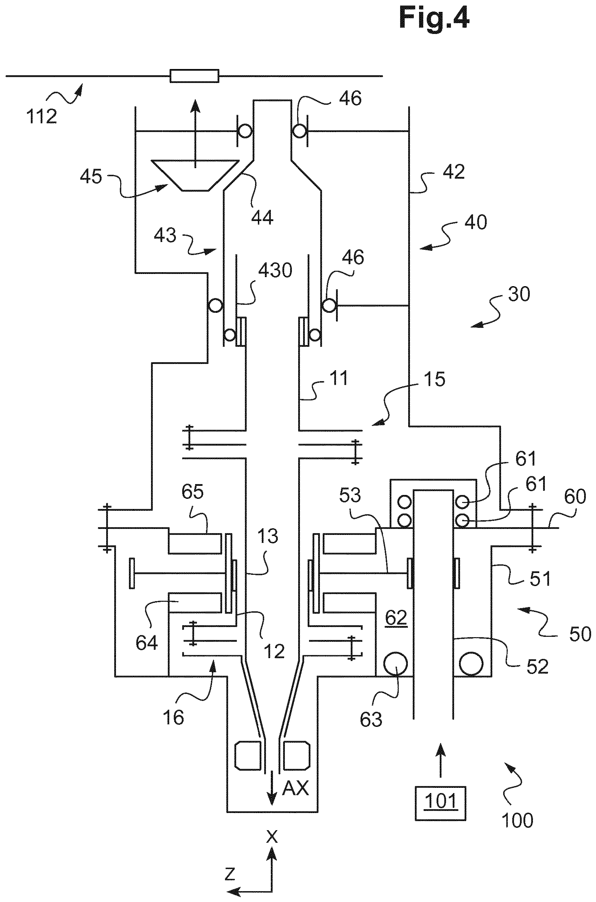

En référence à la figure 4, une boîte de transmission de puissance 30 peut comporter un système de transmission 10 selon l'invention.

Un tel système de transmission 10 peut permettre d'obtenir une boîte de transmission de puissance 30 modulaire, voire allégée.

Dès lors, ladite boîte de transmission de puissance 30 peut comprendre des modules qui sont fixés, éventuellement directement, de manière réversible les uns aux autres.

Par exemple, la boîte de transmission de puissance 30 peut comprendre un module dit « module principal 40 ». Ce module principal 40 est délimité par un carter principal 42. Le carter principal 42 peut comprendre une ou plusieurs pièces fixées les unes aux autres. Le module principal 40 loge au moins un organe mécanique 43 rotatif devant être entraîné par le système de transmission 10 selon l'invention.

Selon l'exemple représenté, cet organe mécanique 43 est roue libre 430. La roue libre 430 peut porter un pignon 44 engrenant une roue 45. La roue 45 peut être reliée à un rotor 102 directement ou via au moins un étage de réduction de vitesse de rotation. Des organes de type roulement à billes ou à rouleaux 46 peuvent être interposés entre la roue libre 430 et le carter principal 42.

En outre, la boîte de transmission de puissance 30 peut comprendre un module dit « module d'entrée 50 ».

Le module d'entrée 50 est délimité au moins par un carter secondaire 51. Le carter secondaire 51 peut comprendre une ou plusieurs pièces fixées les unes aux autres, et peut être solidarisé au carter principal 42.

Le système de transmission 10 mécanique de puissance est logé au moins partiellement dans le module d'entrée 50. Dès lors, un desdits premier arbre principal 11 et deuxième arbre principal 12 du système de transmission 10 mécanique de puissance engrène l'organe mécanique 43, et l'autre arbre principal est engrené par un dispositif d'entrainement.

Par exemple, le dispositif d'entrainement comporte une roue d'entrée 53 qui engrène les cannelures du deuxième arbre principal 12. De plus, le dispositif d'entrainement comporte un pignon d'entrée 52 qui engrène la roue d'entrée 53. Des organes de type roulement à billes ou à rouleaux 63 peuvent être interposés entre le carter secondaire 51 et le pignon d'entrée 52. De même, des organes de type roulement à billes ou à rouleaux 64 peuvent être interposés entre le carter secondaire 51 et la roue d'entrée 53.

Par ailleurs, le pignon d'entrée 52 peut sortir du volume d'entrée 62 délimité par le carter secondaire 51, pour déboucher à l'extérieur de la boîte de transmission de puissance 30.

Pour séparer le module d'entrée 50 du module principal 40, la boîte de transmission de puissance 30 peut comporter une cloison 60 interposée entre le module d'entrée 50 et le module principal 40. Par exemple, la cloison est interposée entre une collerette du carter principal 42 et une collerette du carter secondaire 51, le carter principal 42 étant vissé au carter secondaire 51.

Dès lors, la cloison 60 et le carter secondaire 51 délimitent conjointement le volume d'entrée 62.

Eventuellement, le premier arbre principal 11 sort du volume d'entrée 62 en traversant la cloison 60 pour déboucher dans le module principal 40 afin d'engrener l'organe mécanique 43.

Des organes de type roulement à billes ou à rouleaux 61 peuvent être interposés entre la cloison 60 et le pignon d'entrée 52. De même, des organes de type roulement à billes ou à rouleaux 65 peuvent être interposés entre la cloison 60 et la roue d'entrée 53.

Cette architecture permet un montage, et de fait un démontage aisé de la boîte de transmission de puissance 30.

En effet, le module principal 40 peut dans un premier temps être assemblé.

De plus, le sous-ensemble comprenant le premier arbre principal 11 puis le premier moyen d'accouplement 15 puis l'arbre intermédiaire 13 peut être assemblé. De plus, le sous-ensemble comprenant le deuxième arbre principal 12 puis le deuxième moyen d'accouplement 16 et le cas échéant l'arbre de liaison 14 peut être assemblé séparément.

Dès lors, la roue d'entrée est glissée sur les cannelures du deuxième arbre principal 12.

L'arbre intermédiaire 13 est alors fixé à l'arbre de liaison 14.

L'ensemble est alors placé dans le carter secondaire du module d'entrée 50.

Le module d'entrée 50 est enfin fixé au module principal 40, en faisant coïncider les cannelures du premier arbre principal avec des cannelures d'un pignon de roue libre 430.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système de transmission (10) mécanique de puissance comprenant un premier arbre principal (11) qui s'étend longitudinalement jusqu'à un premier moyen d'accouplement (15) et un deuxième arbre principal (12) qui s'étend longitudinalement jusqu'à un deuxième moyen d'accouplement (16), le premier arbre principal (11) étant solidarisé au premier moyen d'accouplement (15) et le deuxième arbre principal (12) étant solidarisé au deuxième moyen d'accouplement (16), le système de transmission (10) mécanique de puissance comprenant un arbre intermédiaire (13) solidarisé au premier moyen d'accouplement (15), un sous-ensemble du système de transmission (10) mécanique de puissance comprenant successivement et longitudinalement selon un sens d'extension (AX) le premier arbre principal (11) puis le premier moyen d'accouplement (15) puis l'arbre intermédiaire (13), ledit deuxième arbre principal (12) étant un arbre creux, le premier moyen d'accouplement (15) et le deuxième moyen d'accouplement (16) étant reliés mécaniquement par au moins ledit arbre intermédiaire (13), ledit arbre intermédiaire (13) traversant ledit deuxième arbre principal (12) pour être relié au deuxième moyen d'accouplement (16), ledit deuxième arbre principal (12) étant agencé longitudinalement dans un espace (17) situé entre ledit premier moyen d'accouplement (15) et ledit deuxième moyen d'accouplement (16)
**caractérisé en ce qu'**un arbre de liaison (14) est solidarisé en rotation à l'arbre intermédiaire (13) par une première connexion mécanique (18) et au deuxième moyen d'accouplement (16) par une deuxième connexion mécanique (19), ledit arbre de liaison (14) entourant une zone distale (136) de l'arbre intermédiaire (13), la zone distale (136) étant en saillie longitudinale du deuxième moyen d'accouplement (16) selon ledit sens d'extension (AX), ledit arbre intermédiaire (13) s'étendant du premier moyen d'accouplement (15) jusqu'à une extrémité (134) filetée, un écrou (20) étant vissé sur ladite extrémité (134) filetée.

2. Système de transmission mécanique de puissance selon la revendication 1,
**caractérisé en ce que** le premier arbre principal (11) porte des cannelures (113) agencées en dehors dudit espace (17).

3. Système de transmission mécanique de puissance selon l'une quelconque des revendications 1 à 2,
**caractérisé en ce que** le deuxième arbre principal (12) porte des cannelures (124) agencées au moins partiellement dans ledit espace (17).

4. Système de transmission mécanique de puissance selon l'une quelconque des revendications 1 à 3,
**caractérisé en ce que** ledit arbre intermédiaire (13) est fixé au deuxième moyen d'accouplement (16).

5. Système de transmission mécanique de puissance selon l'une quelconque des revendications 1 à 4,
**caractérisé en ce que** ladite première connexion mécanique (18) est réversible.

6. Système de transmission mécanique de puissance selon l'une quelconque des revendications 1 à 5,
**caractérisé en ce que** ledit arbre de liaison (14) comporte un tronçon conique dit « tronçon extérieur (141) » et ledit arbre intermédiaire (13) comporte un tronçon conique dit « tronçon intérieur (132) », ledit tronçon intérieur (132) étant emmanché dans ledit tronçon extérieur (141).

7. Système de transmission mécanique de puissance selon l'une quelconque des revendications 1 à 6,
**caractérisé en ce que** ladite première connexion mécanique (18) comporte des cannelures dites « cannelures extérieures (143) » qui sont portées par l'arbre de liaison (14) et qui sont en regard de l'arbre intermédiaire (13), ladite première connexion mécanique (18) comportant des cannelures dites «cannelures intérieures (133) » qui sont portées par l'arbre intermédiaire (13) et en regard de l'arbre de liaison (14), lesdites cannelures intérieures (133) étant en prise avec les cannelures extérieures (143).

8. Système de transmission mécanique de puissance selon l'une quelconque des revendications 1 à 7,
**caractérisé en ce qu'**au moins un desdits premier et deuxième moyen d'accouplements (16) est un moyen d'accouplement à diaphragmes, ledit moyen d'accouplement à diaphragmes comportant un premier diaphragme (151, 161) qui s'étend radialement d'une première base (1511, 1611) à une première zone périphérique (1512, 1612) et un deuxième diaphragme (152, 162) qui s'étend radialement d'une deuxième base (1521, 1621) à une deuxième zone périphérique (1522, 1622), la deuxième zone périphérique (1522, 1622) étant fixée à la première zone périphérique (1512, 1612).

9. Système de transmission mécanique de puissance selon l'une quelconque des revendications 1 à 8,
**caractérisé en ce que** ledit premier arbre principal (11) est séparé longitudinalement du deuxième arbre principal (12) par une première longueur (L1) maximale, ledit premier moyen d'accouplement (15) étant séparé longitudinalement du deuxième moyen d'accouplement (16) par une deuxième longueur (L2) maximale, la deuxième longueur (L2) est plus grande que la première longueur (L1).

10. Boîte de transmission de puissance,
**caractérisée en ce que** cette boîte de transmission de puissance (30) comporte un système de transmission (10) mécanique de puissance selon l'une quelconque de revendications 1 à 9.

11. Boîte de transmission de puissance (30) selon la revendication 10,
**caractérisée en ce que** ladite boîte de transmission de puissance (30) est modulaire en comprenant des modules fixés de manière réversible les uns aux autres, lesdits modules comprenant :
- un module principal (40) délimité par un carter principal (42), ledit module principal (40) accueillant au moins un organe mécanique (43) rotatif,
- un module d'entrée (50) délimité par un carter secondaire (51), ledit module d'entrée (50) logeant au moins ledit système de transmission (10) mécanique de puissance, un desdits premier arbre principal (11) et deuxième arbre principal (12) du système de transmission (10) mécanique de puissance engrenant ledit organe mécanique (43), l'arbre principal n'engrenant pas ledit organe mécanique (43) étant intégralement contenu dans le module d'entrée (50) et étant engrené par un dispositif d'entrainement (52, 53).

12. Boîte de transmission de puissance selon l'une quelconque des revendications 10 à 11,
**caractérisée en ce que** ladite boîte de transmission de puissance (30) comporte une cloison (60) interposée entre le module d'entrée (50) et le module principal (40), ladite cloison (60) et le carter secondaire (51) délimitant un volume d'entrée (62), le premier arbre principal (11) étant au moins partiellement en dehors dudit volume d'entrée (62) pour engrener ledit organe mécanique (43).

13. Boîte de transmission de puissance selon la revendication 11,
**caractérisée en ce que** ledit dispositif d'entrainement comporte une roue d'entrée (53) engrenant ledit deuxième arbre principal (12) et un pignon d'entrée (52) engrenant ladite roue d'entrée (53), ledit pignon d'entrée (52) saillant en dehors dudit volume d'entrée (62) à l'extérieur de la boîte de transmission de puissance (30).

14. Aéronef (1),
**caractérisé en ce que** cet aéronef (1) comporte un système de transmission (10) mécanique de puissance selon l'une quelconque de revendications 1 à 9.

## Patentansprüche

1. Mechanisches Leistungsübertragungssystem (10) mit einer ersten Hauptwelle (11), die sich in Längsrichtung zu einer ersten Kupplungseinrichtung (15) erstreckt, und einer zweiten Hauptwelle (12), die sich in Längsrichtung zu einer zweiten Kupplungseinrichtung (16) erstreckt, wobei die erste Hauptwelle (11) mit der ersten Kupplungseinrichtung (15) fest verbunden ist und die zweite Hauptwelle (12) mit der zweiten Kupplungseinrichtung (16) fest verbunden ist, wobei das mechanische Leistungsübertragungssystem (10) eine Zwischenwelle (13) umfasst, die mit der ersten Kupplungseinrichtung (15) fest verbunden ist, wobei eine Unterbaugruppe des mechanischen Leistungsübertragungssystems (10) nacheinander und längs in einer Erstreckungsrichtung (AX) die erste Hauptwelle (11), dann die erste Kupplungseinrichtung (15), dann die Zwischenwelle (13) umfasst, wobei die zweite Hauptwelle (12) eine Hohlwelle ist, wobei die erste Kupplungseinrichtung (15) und die zweite Kupplungseinrichtung (16) mechanisch durch mindestens die Zwischenwelle (13) verbunden sind, wobei die Zwischenwelle (13) durch die zweite Hauptwelle (12) verläuft, um mit der zweiten Kupplungseinrichtung (16) verbunden zu sein, wobei die zweite Hauptwelle (12) in Längsrichtung in einem Raum (17) zwischen der ersten Kupplungseinrichtung (15) und der zweiten Kupplungseinrichtung (16) angeordnet ist,
**dadurch gekennzeichnet, dass** eine Verbindungswelle (14) durch eine erste mechanische Verbindung (18) mit der Zwischenwelle (13) und durch eine zweite mechanische Verbindung (19) mit der zweiten Kupplungseinrichtung (16) drehfest verbunden ist, dass die Verbindungswelle (14) einen distalen Bereich (136) der Zwischenwelle (13) umgibt, dass der distale Bereich (136) in Längsrichtung von der zweiten Kupplungseinrichtung (16) in der Erstreckungsrichtung (AX) vorsteht, dass sich die Zwischenwelle (13) von der ersten Kupplungseinrichtung (15) zu einem Gewindeende (134) erstreckt und dass eine Mutter (20) auf das Gewindeende (134) geschraubt ist.

2. Mechanisches Leistungsübertragungssystem nach Anspruch 1,
**dadurch gekennzeichnet, dass** die erste Hauptwelle (11) Verzahnungen (113) trägt, die außerhalb des Raums (17) angeordnet sind.

3. Mechanisches Leistungsübertragungssystem nach einem der Ansprüche 1 bis 2,
**dadurch gekennzeichnet, dass** die zweite Hauptwelle (12) Verzahnungen (124) trägt, die zumindest teilweise in dem Raum (17) angeordnet sind.

4. Mechanisches Leistungsübertragungssystem nach einem der Ansprüche 1 bis 3,
**dadurch gekennzeichnet, dass** die Zwischenwelle (13) an der zweiten Kupplungseinrichtung (16) befestigt ist.

5. Mechanisches Leistungsübertragungssystem nach einem der Ansprüche 1 bis 4,
**dadurch gekennzeichnet, dass** die erste mechanische Verbindung (18) umkehrbar ist.

6. Mechanisches Leistungsübertragungssystem nach einem der Ansprüche 1 bis 5,
**dadurch gekennzeichnet, dass** die Verbindungswelle (14) einen als "äußerer Abschnitt (141)" bezeichneten konischen Abschnitt umfasst, die Zwischenwelle (13) einen als "innerer Abschnitt (132)" bezeichneten konischen Abschnitt umfasst, und der innere Abschnitt (132) in den äußeren Abschnitt (141) eingepasst ist.

7. Mechanisches Leistungsübertragungssystem nach einem der Ansprüche 1 bis 6,
**dadurch gekennzeichnet, dass** die erste mechanische Verbindung (18) als "Außenverzahnungen (143)" bezeichnete Verzahnungen umfasst, die von der Verbindungswelle (14) getragen sind und die der Zwischenwelle (13) gegenüberliegen, dass die erste mechanische Verbindung (18) als "Innenverzahnungen (133)" bezeichnete Verzahnungen umfasst, die von der Zwischenwelle (13) getragen sind und die der Verbindungswelle (14) gegenüberliegen, und dass die Innenverzahnungen (133) mit den Außenverzahnungen (143) in Eingriff stehen.

8. Mechanisches Leistungsübertragungssystem nach einem der Ansprüche 1 bis 7,
**dadurch gekennzeichnet, dass** mindestens eine der ersten und zweiten Kupplungseinrichtungen (16) eine Membrankupplungseinrichtung ist, wobei die Membrankupplungseinrichtung eine erste Membran (151, 161), die sich radial von einer ersten Basis (1511, 1611) zu einem ersten Umfangsbereich (1512, 1612) erstreckt, und eine zweite Membran (152, 162) aufweist, die sich radial von einer zweiten Basis (1521, 1621) zu einem zweiten Umfangsbereich (1522, 1622) erstreckt, wobei der zweite Umfangsbereich (1522, 1622) an dem ersten Umfangsbereich (1512, 1612) befestigt ist.

9. Mechanisches Leistungsübertragungssystem nach einem der Ansprüche 1 bis 8,
**dadurch gekennzeichnet, dass** die erste Hauptwelle (11) in Längsrichtung von der zweiten Hauptwelle (12) durch eine erste maximale Länge (L1) getrennt ist, dass die erste Kupplungseinrichtung (15) in Längsrichtung von der zweiten Kupplungseinrichtung (16) durch eine zweite maximale Länge (L2) getrennt ist, und dass die zweite Länge (L2) größer als die erste Länge (L1) ist.

10. Leistungsübertragungsgetriebe,
**dadurch gekennzeichnet, dass** das Leistungsübertragungsgetriebe (30) ein mechanisches Leistungsübertragungssystem (10) nach einem der Ansprüche 1 bis 9 umfasst.

11. Leistungsübertragungsgetriebe (30) nach Anspruch 10,
**dadurch gekennzeichnet, dass** das Leistungsübertragungsgetriebe(30) modular ist, indem es Module umfasst, die reversibel aneinander befestigt sind, wobei die Module umfassen:
- ein Hauptmodul (40), das durch ein Hauptgehäuse (42) begrenzt ist, wobei das Hauptmodul (40) mindestens ein drehbares mechanisches Element (43) aufnimmt,
- ein Eingangsmodul (50), das durch ein sekundäres Gehäuse (51) begrenzt ist, wobei das Eingangsmodul (50) mindestens das mechanische Leistungsübertragungssystem (10) aufnimmt, wobei von der ersten Hauptwelle (11) und der zweiten Hauptwelle (12) des mechanischen Leistungsübertragungssystems (10) eine in das mechanische Element (43) eingreift, wobei die Hauptwelle, die nicht in das mechanische Element (43) eingreift, integral in dem Eingangsmodul (50) enthalten ist und von einer Antriebsvorrichtung (52, 53) in Eingriff genommen ist.

12. Leistungsübertragungsgetriebe nach einem der Ansprüche 10 bis 11,
**dadurch gekennzeichnet, dass** das Leistungsübertragungsgetriebe (30) eine Trennwand (60) aufweist, die zwischen dem Eingangsmodul (50) und dem Hauptmodul (40) angeordnet ist, wobei die Trennwand (60) und das sekundäre Gehäuse (51) ein Eingangsvolumen (62) begrenzen, wobei die erste Hauptwelle (11) zumindest teilweise außerhalb des Eingangsvolumens (62) liegt, um mit dem mechanischen Element (43) in Eingriff zu kommen.

13. Leistungsübertragungsgetriebe nach Anspruch 11,
**dadurch gekennzeichnet, dass** die Antriebsvorrichtung ein Eingangsrad (53), das mit der zweiten Hauptwelle (12) in Eingriff ist, und ein Eingangsritzel (52), das mit dem Eingangsrad (53) in Eingriff ist, umfasst, wobei das Eingangsritzel (52) aus dem Eingangsvolumen (62) außerhalb des Leistungsübertragungsgetriebes (30) vorsteht.

14. Luftfahrzeug (1),
**dadurch gekennzeichnet, dass** das Luftfahrzeug (1) ein mechanisches Leistungsübertragungssystem (10) nach einem der Ansprüche 1 bis 9 aufweist.

## Claims

1. Mechanical power transmission system (10) comprising a first main shaft (11) which extends longitudinally to a first coupling means (15) and a second main shaft (12) which extends longitudinally to a second coupling means (16), the first main shaft (11) being rigidly connected to the first coupling means (15) and the second main shaft (12) being rigidly connected to the second coupling means (16), the mechanical power transmission system (10) comprising an intermediate shaft (13) which is rigidly connected to the first coupling means (15), a sub-assembly of the mechanical power transmission system (10) comprising, successively and longitudinally in a direction of extension (AX), the first main shaft (11), then the first coupling means (15), then the intermediate shaft (13), said second main shaft (12) being a hollow shaft, the first coupling means (15) and the second coupling means (16) being mechanically connected at least by said intermediate shaft (13), said intermediate shaft (13) passing through said second main shaft (12) in order to be connected to the second coupling means (16), said second main shaft (12) being arranged longitudinally in a space (17) located between said first coupling means (15) and said second coupling means (16), **characterised in that** a connecting shaft (14) is secured to the intermediate shaft (13) by a first mechanical connection (18) and to the second coupling means (16) by a second mechanical connection (19) for rotation therewith, said connecting shaft (14) surrounding a distal region (136) of the intermediate shaft (13), the distal region (136) projecting longitudinally from the second coupling means (16) in said direction of extension (AX), said intermediate shaft (13) extending from the first coupling means (15) to a threaded end (134), a nut (20) being screwed onto said threaded end (134).

2. Mechanical power transmission system according to claim 1, **characterised in that** the first main shaft (11) has splines (113) arranged outside of said space (17).

3. Mechanical power transmission system according to either claim 1 or claim 2, **characterised in that** the second main shaft (12) has splines (124) arranged at least partially within said space (17).

4. Mechanical power transmission system according to any of claims 1 to 3, **characterised in that** said intermediate shaft (13) is attached to the second coupling means (16).

5. Mechanical power transmission system according to any of claims 1 to 4, **characterised in that** said first mechanical connection (18) is reversible.

6. Mechanical power transmission system according to any of claims 1 to 5, **characterised in that** said connecting shaft (14) comprises a conical portion referred to as an "outer portion (141)" and said intermediate shaft (13) comprises a conical portion referred to as an "inner portion (132)", said inner portion (132) being fitted into said outer portion (141).

7. Mechanical power transmission system according to any of claims 1 to 6, **characterised in that** said first mechanical connection (18) comprises splines referred to as "outer splines (143)" which are carried by the connecting shaft (14) and which face the intermediate shaft (13), said first mechanical connection (18) comprising splines referred to as "inner splines (133)" which are carried by the intermediate shaft (13) and which face the connecting shaft (14), said inner splines (133) being in engagement with the outer splines (143).

8. Mechanical power transmission system according to any of claims 1 to 7, **characterised in that** at least one of said first and second coupling means (16) is a diaphragm coupling means, said diaphragm coupling means comprising a first diaphragm (151, 161) which extends radially from a first base (1511, 1611) to a first peripheral region (1512, 1612) and a second diaphragm (152, 162) which extends radially from a second base (1521, 1621) to a second peripheral region (1522, 1622), the second peripheral region (1522, 1622) being attached to the first peripheral region (1512, 1612).

9. Mechanical power transmission system according to any of claims 1 to 8, **characterised in that** said first main shaft (11) is longitudinally separated from the second main shaft (12) by a maximum first length (L1), said first coupling means (15) being longitudinally separated from the second coupling means (16) by a second maximum length (L2), the second length (L2) being greater than the first length (L1).

10. Power transmission box, **characterised in that** said power transmission box (30) comprises a mechanical power transmission system (10) according to any of claims 1 to 9.

11. Power transmission box (30) according to claim 10, **characterised in that** said power transmission box (30) is modular **in that** it comprises modules which are reversibly attached to one another, said modules comprising:
- a main module (40) delimited by a main casing (42), said main module (40) accommodating at least one rotary mechanical member (43),
- an input module (50) delimited by a secondary casing (51), said input module (50) housing at least said mechanical power transmission system (10), one of said first main shaft (11) and second shaft main (12) of the mechanical power transmission system (10) engaging with said mechanical member (43), the main shaft not engaging with said mechanical member (43) being entirely contained in the input module (50) and being engaged with by a drive device (52, 53).

12. Power transmission box according to either claim 10 or claim 11, **characterised in that** said power transmission box (30) has a partition (60) interposed between the input module (50) and the main module (40), said partition (60) and the secondary casing (51) delimiting an inlet volume (62), the first main shaft (11) being at least partially outside of said inlet volume (62) in order to engage with said mechanical member (43).

13. Power transmission box according to claim 11, **characterised in that** said drive device comprises an input wheel (53) engaging with said second main shaft (12) and an input pinion (52) engaging with said input wheel (53), said input pinion (52) projecting outside of said inlet volume (62), outside of the power transmission box (30).

14. Aircraft (1), **characterised in that** said aircraft (1) comprises a mechanical power transmission system (10) according to any of claims 1 to 9.
